Europäisches Patentamt

European Patent Office

Office européen des brevets

(11) Veröffentlichungsnummer: **0 367 026**
**A2**

## EUROPÄISCHE PATENTANMELDUNG

(21) Anmeldenummer: 89119338.5

(51) Int. Cl.5: **F16P 3/08**

(22) Anmeldetag: 18.10.89

(30) Priorität: 02.11.88 DE 3837107

(43) Veröffentlichungstag der Anmeldung:
09.05.90 Patentblatt 90/19

(84) Benannte Vertragsstaaten:
CH DE FR GB LI SE

(71) Anmelder: **Elan-Schaltelemente GmbH**
**Hauptstrasse 97**
**D-6301 Wettenberg(DE)**

(72) Erfinder: **Lange, Karl-Heinz**
**Dobergstrasse 112**
**D-4980 Bünde(DE)**

(74) Vertreter: **Stoffregen, Hans-Herbert, Dr.**
**Dipl.-Phys. et al**
**Patentanwälte Strasse & Stoffregen**
**Salzstrasse 11a Postfach 2144**
**D-6450 Hanau/Main 1(DE)**

(54) Sicherheits-Türverriegelungsvorrichtung.

(57) Gegenstand der Erfindung ist eine Sicherheits-Türverriegelungsvorrichtung für die Überwachung und Zuhaltung beweglicher Schutzeinrichtungen an technischen Anlagen. Die Vorrichtung enthält einen ausfahrbaren Verriegelungsbolzen (3), der mechanisch mit einem Positionsschalter verbunden ist und einen an der jeweiligen Schutzeinrichtung befestigten Schlüssel (6) verriegelt. Mindestens ein weiterer Positionsschalter wird über eine Schaltkurve (10) vom Schlüssel zwangsläufig gesteuert. Die Energie für das Zurückziehen des Verriegelungsbolzens (3) wird durch manuelles Spannen eines Zeitwerks und durch Ingangsetzung eines Zeitwerks erzeugt, das nach einer eingestellten Zeit einen Sicherheitshebel am Verriegelungsbolzen ausklinkt, der durch Federkraft vom Schlüssel (6) gelöst wird.

FIG.1

## Sicherheits-Türverriegelungsvorrichtung

Die Erfindung bezieht sich auf eine Sicherheits-Türverriegelungsvorrichtung gemäß der Oberbegriffe der Ansprüche 1 und 2.

Für die Überwachung und Zuhaltung bzw. Verriegelung von beweglichen Schutzeinrichtungen, z.B. an Fertigungsanlagen, werden Sicherheits-Türverriegelungsgeräte eingesetzt, die verhindern, daß Schutztüren, Schutzgitter usw. vor dem Ende gefährlicher Bewegungen, z.B. Nachlaufbewegungen, zufällig oder absichtlich geöffnet werden können. Mit den Sicherheits-Türverriegelungsgeräten werden eine Reihe von Sicherheitsanforderungen erfüllt. Der gefährliche Prozeß kann nur bei geschlossener Schutzeinrichtung beginnen. Während der gefährliche Prozeß andauert, verhindert das jeweilige Sicherheitsgerät das Öffnen der Schutzeinrichtung. Erst nach dem Ende des gefährlichen prozesses erlaubt das jeweilige Türverriegelungsgerät das Öffnen der Schutzeinrichtung. Bei geöffneter Schutzeinrichtung verhindert das jeweilige Gerät das Wiederingangsetzen des gefährlichen Proszesses.

Bekannt sind Sicherheits-Türverriegelungsvorrichtungen, die je einen unter Federvorspannung stehenden, magnetisch antreibbaren Verriegelungsbolzen enthalten, mit dem eine bewegliche Schutzeinrichtung verriegelt wird. Es sind in der Vorrichtung Überwachungs-Positionsschalter zum Erkennen der jeweiligen Stellung der beweglichen Schutzeinrichtung vorhanden. Darüber hinaus überwacht ein weiterer Positionsschalter die Stellung des Verriegelungsbolzens. Mit Hilfe der beiden Positionsschalter kann die Anordnung auf Fehlfunktion der Positionsschalter überwacht werden.

Bei einer Ausführungsform einer Sicherheits-Türverriegelungsvorrichtung wird der Verriegelungsbolzen mittels Magnetkraft verriegelt, d.h. die Verriegelung benötigt Strom. In stromlosem Zustand entriegelt die Sicherheits-Türverriegelungsvorrichtung die Schutzeinrichtung. Bei einem Stromausfall in verriegeltem Zustand wird jedoch ein Strompfad für das Einschalten unterbrochen. Nach Beendigung des Stromausfalls kann die Schutzeinrichtung erst nach vorheriger Öffnung verriegelt werden.

Bei einer anderen Ausführungsform bewirkt die Federkraft die Verriegelung. Unter Strom entriegelt das Türverriegelungsgerät. Bei Stromausfall erfolgt eine Verriegelung, d.h., durch die Verriegelung der Schutzeinrichtung wird ein gefahrloser Zustand erzielt. Bei Stromausfall kann die Türverriegelungseinrichtung in verriegelter Position nicht entriegelt werden. Der Magnet des Verriegelungsbolzens wird bei den bekannten Sicherheits-Türverriegelungsvorrichtungen mit Hilfe einer Spule betätigt, die an eine Steuerspannung, z.B. an 24 Volt gelegt wird.

Die Erzeugung einer für die Magnetspulen geeigneten Steuerspannung und die Verlegung von Steuerspannungsleitungen zu den Sicherheits-Türverriegelungsgeräten sowie der Einbau von Schaltgeräten für die Steuerspannung erfordert einen relativ hohen Aufwand.

Der Erfindung liegt daher die Aufgabe zugrunde, eine Sicherheits-Türverriegelungsvorrichtung der eingangs beschriebenen Gattung dahingehend weiterzuentwickeln, daß die Verriegelungs- und Entriegelungsbedingungen ohne einen elektromagnetischen Antrieb durchgeführt werden können.

Die Aufgabe wird insbesondere dadurch gelöst, daß der Verriegelungsbolzen mittels eines über eine mechanisch wirkende Hemmeinrichtung verzögert wirkendes Entriegelungselement entriegelbar ist. Auch zeichnet sich die Lösung dadurch aus, daß ein Steuerwerk mit einem Federantrieb, der mittels eines äußeren Organs von Hand spannbar ist, beim Spannen mit einem in der gespannten Position des Federantriebs in der Anlaufstellung befindlichen Zeitschaltwerk gekuppelt ist, daß das Steuerwerk eine Steuerscheibe und in Abhängigkeit von der Drehstellung der Steuerscheibe in verschiedene Schwenkstellungen versetzbare Arme aufweist, von denen einer den weiteren Positionsschalter kurz vor dem oder im gespannten Zustand des Federantriebs betätigt und ein zweiter eine das Zeitschaltwerk beim Spannen des Federantriebs gegen Ablaufen sichernde Sperre aufhebt, und daß eine durch das Organ spannbare Feder mit ihrem einen Ende in Richtung der Entriegelungslage den Verriegelungsbolzen beansprucht, der in ausgefahrenem Zustand durch einen vom Zeitwerk entriegelbaren Mechanismus verriegelt ist.

Nach den erfindungsgemäßen Lösungen wird keine Steuerspannung mehr benötigt. Zugleich entfallen die Schaltelemente im Steuerspannungskreis sowie die Leitungen zwischen den Schaltelementen, einem Steuerspannungserzeuger und einem Überwachungsorgan für den Prozeß. Die Ablaufdauer der Hemmeinrichtung bzw. des Zeitwerks wird etwas größer als die Auslauf zeit des Prozesses gewählt. Hierdurch wird gewährleistet, daß eine Entriegelung nur im Stillstand des durch die Schutzeinrichtung vor Zugang gesicherten Prozesses aufgehoben wird. Die Energie für das Zurückziehen des Verriegelungsbolzens wird bei der vorstehend beschriebenen Vorrichtung durch manuelles Spannen einer Feder erzeugt. Zugleich wird die Feder eines Steuerwerks gespannt, das die Schaltelemente steuert, die die Abschaltung des durch die Schutzeinrichtung gesicherten Prozesses bewirken. Ein ebenfalls manuell mit der notwendigen Energie für den Ablauf versorgtes Zeitwerk ist in seiner Ablaufdauer auf die Auslaufzeit des Prozesses abgestimmt und gibt nach seiner Ablaufzeit den Verriegelungsbolzen für das Zurückziehen durch die Feder frei. Nachdem der Verriegelungsbolzen in seine rückwärtige Endlage in der Sicherheits-Türverriegelungsvorrichtung zurückgezogen worden ist, kann die Schutzeinrichtung von Hand geöffnet werden. Da für die Sicherheits-Türverriegelungsvorrichtung keine elektrische Energie benötigt wird, ist ihre Arbeitsweise bei Energieausfall nicht beeinträchtigt.

Bei einer bevorzugten Ausführungsform ist das äußere Organ eine in einer Gehäusewand der Sicherheits-Türverriegelungsvorrichtung drehbar gelagerte Drehhandhabe, die mit einer Buchse des Steuerwerks verbunden ist, die die Steuerscheibe trägt und im Gehäuse drehbar gelagert ist, sowie eine Drehfeder trägt, deren eines Ende in einer Ausnehmung der Buchse eingehängt und deren anderes Ende gegen einen von einer Verriegelungsstange vorspringenden Stift angelehnt ist. Bei der Drehung der Drehhandhabe, z.B. eines Knopfs oder eines Schalthebels, werden die Spiralfeder und die Drehfeder gespannt. Es wird die für das Zurückziehen des Verriegelungsbolzens notwendige Federvorspannung erzeugt. Zugleich wird die Spiralfeder gespannt, mit der die Buchse und damit die Steuerscheibe angetrieben wird.

Vorzugsweise ist die Buchse an einem Ende mit einer Scheibe formschlüssig verbunden, die eine Nase aufweist, die gegen einen Mitnehmer des Zeitschaltwerks andrückbar ist, das im Gehäuse auf der dem Steuerwerk entgegengesetzten Seite angeordnet ist. Die für den Ablauf des Zeitwerks notwendige Energie wird durch Drehung des Mitnehmers dem Zeitwerk zugeführt. Es reicht ein Handgriff aus, um das Steuerwerk und das Zeitwerk in den Arbeitszustand zu versetzen und den Verriegelungsbolzen mit einer Federvorspannung zu beaufschlagen.

Die Hemmeinrichtung wie das Zeitschaltwerk ist vorzugsweise ein mechanisch arbeitendes Kurzzeitschaltwerk. Die Hemmeinrichtung kann aber auch hydraulisch oder pneumatisch betätigbar sein.

Eine günstige Ausführungsform besteht darin, daß die Arme Bestandteil eines im Gehäuse exzentrisch schwenkbar unter Federvorspannung stehenden Schalthebelkörpers sind, der einen mit einer Sperrkante der Steuerscheibe verbundenen, diese bei gespannter Spiralfeder verriegelnden, Lappen, den winkelversetzt zum Lappen angeordneten ersten Arm, der form- und/oder kraftschlüssig mit einem von der Schaltkurve axial verschiebbaren Stößel verbunden ist, und einen zweiten Arm, der winkelversetzt zum ersten Arm angeordnet ist und die Verriegelung des Zeitschaltwerks nach dem Spannen der Feder aufhebt, sowie einen dritten Arm aufweist, der mit dem Positionsschalter des Verriegelungsbolzens verbunden ist.

Der Schalthebelkörper vereinigt in sich die wesentlichen Mittel für die Steuerung der Elemente, die zum Verriegeln und Entriegeln der Sicherheits-Türverriegelungsvorrichtung zusammenwirken. Der Schalthebelkörper wird in seinen Winkelpositionen, denen verschiedene Steuerzustände der Sicherheits-Türverriegelungsvorrichtung zugeordnet sind, durch die Spiralfeder und die Sperrkante bestimmt. Die Steuerscheibe weist darüber hinaus einen Nocken mit Anschlagflächen für einen ortsfest im Gehäuse angeordneten Anschlag auf, der die eine Endlage der Steuerscheibe bestimmt. Der Drehwinkel, den die Steuerscheibe zwischen dem Anschlag und der durch den Lappen festgelegten anderen Endlage zurücklegen kann, ist auf etwa 255° eingestellt. Es ist also keine volle Umdrehung des Organs notwendig, um die Energie für die Entriegelung des Verriegelungsbolzens bereitzustellen.

Bevorzugterweise enthält das Zeitschaltwerk ein auf einer drehbaren Welle angeordnetes Sperrad mit einer Verzahnung am äußeren Umfang, die mit der Spitze einer schwenkbar gelagerten Sperrklinke zusammenwirkt, die durch den zweiten Arm steuerbar ist. Der zweite Arm blockiert das Sperrad so lange, bis die Steuerscheibe in ihre eine Endlage gedreht worden ist, in der sie vom Lappen verriegelt wird.

Vorzugsweise enthält das Sperrad einen Nocken, durch den ein schwenkbar gelagerter Sicherungshebel betätigbar ist, dessen Spitze zur Fixierung der Verriegelungsstange in der ausgefahrenen Stellung des Verriegelungsbolzens in eine Sperrnut eingreift. Das Zeitwerk steuert somit durch das Sperrad die Freigabe des Verriegelungsbolzens für die Zurückziehung in die rückwärtige Endlage und damit die Freigabe der Schutzeinrichtung für die Öffnung.

Zweckmäßig ist es, im Gehäuse einen von dessen Außenseite von Hand axial beweglichen Notentriegelungsschieber anzuordnen, der einen Vorsprung mit einer Schräge zur Steuerung des Sicherungshebels und eine Kante zur Mitnahme des Stifts der Verriegelungsstange aufweist. Der Schieber ist für die Notentriegelung bestimmt. In entriegelter Lage des Verriegelungsbolzens ist der Schieber zweckmäßigerweise mit einem Sperrhebel verriegelbar, dessen Verriegelungsstellung nur durch den Vorsprung eines Zylinderschlosses aufhebbar ist.

Die Erfindung wird im folgenden an Hand eines in einer Zeichnung dargestellten Ausführungsbeispiels näher beschrieben, aus dem sich weitere Einzelheiten, Merkmale und Vorteile ergeben.

Es zeigen:

Fig. 1 eine Sicherheits-Türverriegelungsvorrichtung ohne Gehäuse von einer Seite aus,

Fig. 2 eine Sicherheits-Türverriegelungsvorrichtung mit einem Gehäuse im Schnitt von der gleichen Blickrichtung aus wie in Fig. 1 und

Fig. 3 die in Fig. 1 und 2 dargestellte Sicherheits-Türverriegelungsvorrichtung im Längsschnitt.

Eine Sicherheits-Türverriegelungsvorrichtung (1) enthält ein Gehäuse (2), z. B. aus Aluminium, in dem ein Verriegelungsbolzen (3) axial verschiebbar gelagert ist. Der Verriegelungsbolzen (3) steht durch eine Feder (4) unter einer Kraft, die den Verriegelungsbolzen nach außen zu verschieben versucht. Am Gehäuse (2) ist ein Verriegelungskopf (5) befestigt, der eine nicht dargestellte erste Aussparung für den Verriegelungsbolzen (3) und eine nicht dargestellte, die erste Aussparung kreuzende zweite Aussparung enthält, in die ein an einer nicht dargestellten Schutzeinrichtung befestigtes Betätigungsorgan, ein sogenannter Schlüssel (6), eingeschoben werden kann, der einen, dem Gehäuse (2) zugewandten Endsperrbolzen (7) trägt, mit dem ein unter Federvorspannung stehender Sperrhebel (8) geschwenkt wird, der den Verriegelungsbolzen durch Anliegen an einem nicht näher bezeichneten radialen Bund in seiner, ein Stück in das Gehäuse eingefahrenen einen Endlage fixiert.

Am Gehäuse (2) ist ferner ein Umlenkkopf (9) befestigt, der eine nicht dargestellte erste Aussparung für eine drehbar gelagerte Schaltkurve (10) und eine, die erste Aussparung kreuzende Aussparung für den Schlüssel (6) aufweist. Die unter Federvorspannung stehende Schaltkurve (10) steuert einen Positionsschalter, der unten noch näher beschrieben wird.

Ein Hauptkörper (11) ist mit dem Gehäuse (2) an den gleichen Stellen verschraubt wie ein Magnet bei elektromagnetisch gesteuerten Türverriegelungsvorrichtungen. An der Rückseite des Hauptkörpers (11) ist eine Platine (12) angeschraubt, die ihrerseits ein Zeitschaltwerk (13) trägt. Auf einer Welle (14) des Zeitschaltwerks (13) ist ein Sperrad (15) mittels einer Stiftschraube (16) befestigt. Ein Ansatz des Sperrads (15) trägt außerdem einen Schaltnocken (17) und einen Mitnehmer (18). Das Zeitschaltwerk (13) ist vorzugsweise ein handelsübliches Kurzzeitschaltwerk.

Achsgleich mit der Welle (14) ist im Hauptkörper (11) ein Steuerwerk angeordnet, das durch einen Federantrieb, eine Spiralfeder (19) im Uhrzeigersinn angetrieben wird. Das Steuerwerk besteht aus den folgenden Teilen:

Eine Buchse (20) weist an ihrer einen Stirnseite eine Mitnehmernut (21) und eine weitere Nut (22) sowie einen Ansatz (23) auf, der eine Steuerscheibe (24) zentriert, und über eine Buchse (25), eine Scheibe (26) und eine Schraube (27) mit der Buchse (20) eine Einheit bildet. Die Buchse (25) besitzt ferner eine Nase (28), die einerseits in die Nut (22) und andererseits in eine Aussparung der Steuerscheibe (24) eingreift und diese so zur Buchse (22) hin indexiert. In die Nut (22) sind außerdem noch die Uhrfeder (19) und eine Drehfeder (29) eingehängt. Der andere Schenkel (30) der letzteren ragt durch eine Ausfräsung der Buchse (25) nach außen.

Die Scheibe (26) besitzt einen Nocken (31), der mit dem Mitnehmer (18) des Sperrads (15) zusammenwirkt. Die Steuerscheibe (24) weist am Umfang eine Nase mit Anschlagflächen (32), (33) auf und hat ferner eine Sperrkante (34) und einen Mitnehmer (34a). Die Anschlagflächen (32) und (33) wirken mit gehäusefesten Anschlägen (35) und (36) zusammen.

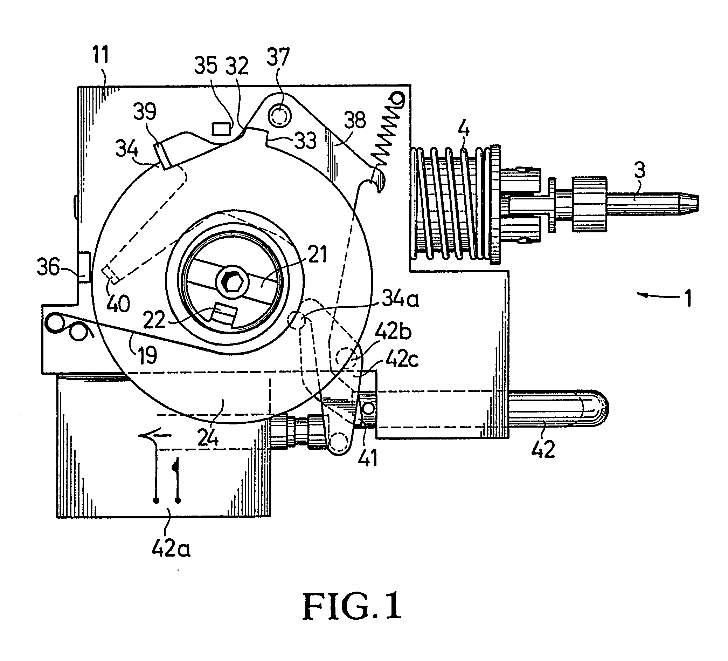

Vorne auf dem Hauptkörper (11) ist in einem Punkt (37) ein Schalthebelkörper (38) schwenkbar gelagert, der durch eine Zugfeder so angetrieben wird, daß ein abgewinkelter Lappen (39) in der Regel immer auf dem äußeren Durchmesser der Steuerscheibe (24) aufliegt. In Fig. 1 ist dieser jedoch vor die Sperrkante (34) gedreht dargestellt. Ein weiterer abgewinkelter Lappen (40) oder Arm des Schalthebelkörpers (38) ragt durch eine Öffnung tief in den Hauptkörper (11) hinein. Ein Arm (41) wirkt über einen Querstift auf einen Stößel (42), dessen linke Endfläche einen Endschalter (42a) als Positionsschalter betätigen kann. In einem Punkt (42b) ist außerdem vorne auf dem Hauptkörper (11) ein zweiarmiger Hebel (42c) gelagert, der, betätigt durch den Mitnehmer (34a), ebenfalls auf den Endschalter (42a) einwirkt, so daß dieser in der gezeichneten Stellung geöffnet ist.

Auf der Platine (12) ist ferner eine Sperrklinke (43) gelagert, die in Verzahnungen des Sperrads (15) eingreift. Über einen zweiten Arm (44) der Sperrklinke (43) kann diese, wie dargestellt, durch den Lappen (40) des Schalthebelkörpers (38) außer Eingriff gebracht werden.

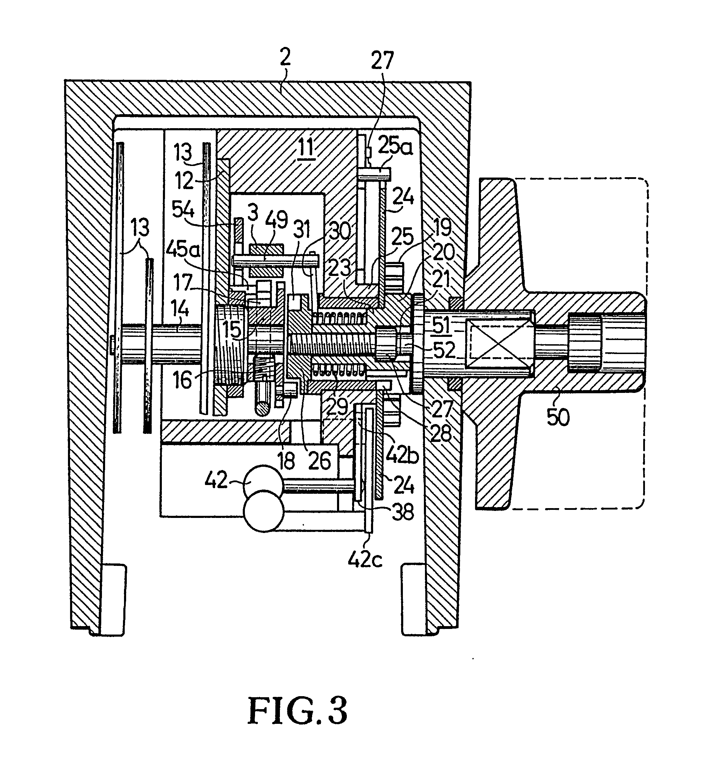

Außerdem ist auf der Platine (12) ein Zeit-Sicherungshebel (45) gelagert, der in eine Sperrnut (46) einer Verriegelungsstange (47), die mit dem Verriegelungsbolzen (3) verbunden ist, einfallen kann. In der in den Fig. 1 bis 3 dargestellten Betriebsstellung ist er aber über einen zweiten Arm (48) durch den Nocken (17) außer Eingriff gebracht. Ein dritter Arm (48a) steht über eine Schubstange (48b) mit einem Endschalter (48c) als Positionsschalter in formschlüssiger Verbindung. Die Endschalter (48c) und (42a) sind in Reihe gelegt. Ferner wirkt ein Stift (45a) im Zeit-Sicherungshebel (45) zusammen mit einer Schräge (53) eines Notentriegelungsschiebers (54), der außerdem noch mit seiner einen Kante (55) mit einem Stift (49) in der Verriegelungsstange (47) in Eingriff gelangen kann. Der Schieber (54) kann an einem Knopf (56) von außen in Pfeilrichtung verschoben werden und wird dann durch eine Klinke (57), die in eine Kerbe (58) des Schiebers (54) einfällt, festgehalten. Durch Betätigung eines Schlosses (59) kann diese Verklinkung wieder aufgehoben werden.

In die Verriegelungsstange (47) ist ferner der Stift (49) eingedrückt, der mit Schenkel (30) der Drehfeder (29) zusammenwirkt.

Im Gehäuse (2) sind achsgleich zum Steuerwerk als äußeres Betätigungsorgan eine Drehhandhabe (50) und eine Welle (51) mit einem Mitnehmer (52) gelagert. Letzterer greift in die Mitnehmernut (21) der Buchse (20) ein.

Um das Funktionsmodul in dem Gehäuse (2) montieren zu können, müssen der Mitnehmer (52) und die Mitnehmernut (21) eine entsprechende Stellung zueinander haben. Die aus dem Gehäuse (2) herausragende Spitze des Stößels (42) liegt an der Schaltkurve (10) an, die bei der Vorbeibewegung des Schlüssels (6) geschwenkt wird und in eine Codieröffnung des Schlüssels (6) bei geschlossener Schutzeinrichtung eingreift.

Die oben beschriebene Sicherheits-Türverriegelungsvorrichtung (1) eignet sich zur Einzelabsicherung einer Gefahrenstelle und als Zentralelement zur Zentralabsicherung mehrerer Gefahrenstellen. Mit dem Zeitschaltwerk (13) kann ohne zusätzliche Überwachung der Auslaufzeit von Maschinenteilen die Zuhaltung von Vergleitungen und Verdeckungen bis zum Stillstand der Maschinenteile gesichert werden.

Die Betätigung der Drehhandhabe (50) erfolgt durch einen einfachen Handgriff. Eine Manipulation der Drehhandhabe (50) oder eines ähnlichen Elements wie eines Hebels, ist nicht möglich. Veränderungen von Aufbau und Funktion sind sichtbar oder führen zur Zerstörung des Elementes.

Mit der Betätigung der Drehhandhabe (50) wird die Antriebsenergie eines Prozesses abgeschaltet und der Ablauf des integrierten Zeitschaltwerks (13) ausgelöst. Erst nach Ablauf der eingestellten Zeitdauer des integrierten Zeitschaltwerks (13) wird die Zuhaltung aufgehoben, wodurch eine Öffnung der Verkleidung oder des Verdecks möglich ist. Nur mit Schließen der Verkleidungen oder Verdecke ist automatisch die Rücksetzung des Zeitschaltwerks (13), die Einschaltung der Zuhaltung und die Aufhebung der elektrischen Verriegelung möglich.

In den Fig. 1 bis 3 ist die Sicherheits-Türverriegelungsvorrichtung in folgender Stellung gezeigt: "Türöffnung eingeleitet, Verzögerungszeit abgelaufen, Verriegelungsbolzen jedoch noch nicht herausgezogen."

Diese Stellung ist durch Drehen an der Drehhandhabe (50) und damit der Steuerscheibe (24) erreichbar. Durch den Mitnehmer (34a) und den Hebel (42c) wird der Endschalter (42a) unmittelbar vor Erreichen der Raststellung geöffnet, in der der Lappen (39) an der Sperrkante (34) anliegt und die Spiralfeder (19) durch Anhalten der Steuerscheibe (24) gespannt hält. Durch das Öffnen des Endschalters (42a) befindet sich die zu sichernde Maschine jetzt im Auslauf, da der Endschalter (42a) die Energiezufuhr zu der Maschine steuert bzw. im offenen Zustand unterbricht.

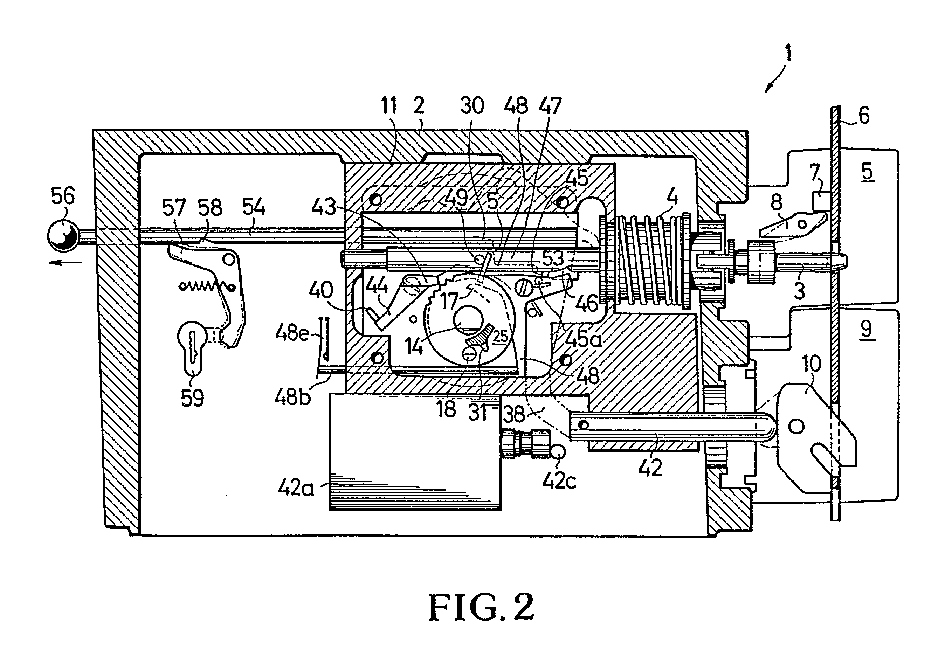

Wie aus Fig. 2 ersichtlich, drückt in dieser Stellung der Schenkel (30) der Drehfeder (29) gegen den Stift (49) und wird ohne eine eingelegte Sperre die Verriegelungsstange (47) bei sich entgegen der Wirkung der Sicherheitsfeder (4) aus dem Schlüsselteil herausziehen. Wird jetzt der in Fig. 2 dargestellte, mit der zu sichernden Tür verbundene Schlüssel (6) aus dem Verriegelungs- und Umlenkkopf herausbewegt, so wird durch die Schaltkurve (10) der Stößel (42) den Schalthebelkörper (38) über dessen Arm (41) mitnehmen. Gleichzeitig bewirkt die linke Endfläche des Stößels (42), daß der Endschalter (42a) in seiner Offen-Stellung gesichert wird. Der Endschalter (48c) überwacht zur zusätzlichen Sicherheit die korrekte Funktion des Verriegelungsbolzens (3) und Zeit-Sicherungshebels (45).

Während sich der Schalthebelkörper (38) zu drehen beginnt, verläßt der Lappen (39) die Sperrkante (34) der Steuerscheibe (24), die sich unter dem Einfluß der Spiralfeder (19) dreht, bis sie mit ihrer Anschlagfläche (33) an den ortsfesten Anschlag (36) gelangt. Der abgewinkelte Lappen (40) des Schalthebelkörpers (38) hat sogleich der Sperrklinke (43) gestattet, mit dem Sperrad (15) wieder in Eingriff zu kommen. Je nach der Stellung, in der die Scheibe (26) mit ihrem Nocken (31) mit dem Steuerwerk verschraubt wurde, wird der Nocken (31) während des Rücklaufs der Schalteinheit früher oder später auf den Mitnehmer (18) treffen und das Zeitschaltwerk bis zum Erreichen des Anschlags (35) entsprechend weit aufgezogen haben.

Die Stellung des Nockens (31) zur Steuerscheibe (24) bestimmt also die Verzögerungszeit der Einrichtung.

In dem jetzt erreichten Zustand wird der Verriegelungsbolzen (3) in üblicher Weise durch den Sperrhebel so gehalten, daß die Sicherheitsfeder gespannt ist. Der Sicherungshebel (45) liegt jetzt federnd an der Verriegelungsstange (47) an, da der Schaltnocken (17) durch das Spannen des Steuerwerks aus dem Eingriffsbereich des Arms (48) gedreht wurde.

Wird nun die Tür geschlossen und der Verriegelungsbolzen (3) durch den Entsperrbolzen (7) im Schlüssel (6) über den Sperrhebel (8) freigegeben, schnellt der Verriegelungsbolzen, angetrieben durch die Feder (4) vor und verriegelt den Schlüssel (6).

Kurz bevor dieser seine Endstellung erreicht hat, fällt der Sicherheitshebel (45) in die Sperrnut (46) der Verriegelungsstange (47) und sichert diese. Durch das Schließen der Tür ist über den Umlenkkopf und den Stößel (42) jetzt der Endschalter (42a) geschlossen worden, so daß die zu sichernde Maschine wieder eingeschaltet werden kann.

Wird, um die Tür zu öffnen, die Drehhandhabe (50) entgegen dem Uhrzeigersinn um ca. 255° gedreht, fällt der Schalthebelkörper (38) mit seinem Lappen (39) hinter die Sperrkante (34) der Steuerscheibe (24). Kurz bevor dies geschieht, muß jedoch schon über den Mitnehmer (34a) und den Hebel (42c) der Endschalter (42a) geöffnet und damit die Maschine abgeschaltet worden sein.

Sollte die Drehhandhabe (50) nicht bis zum Einrasten der Steuerscheibe (24) gedreht worden sein, kehrt sie in ihre Ausgangslage zurück, ohne daß irgendeine Aktion erfolgt, es sei denn, das der oben genannte Abschaltpunkt ganz kurz vor dem Einrasten schon erreicht wurde. In diesem Fall wird die Maschine schon abgeschaltet, aber die Tür läßt sich nicht öffnen. Erst wenn die Drehhandhabe (50) dann bis in die Raststellung der Steuerscheibe (24) gedreht worden ist, beginnt die Sicherungszeit zu laufen und die Tür kann danach geöffnet werden. Da durch die Stellung der Drehhandhabe (50) erkannt werden kann, ob die Raststellung erreicht ist und da durch diese Fehlbedienung (Nichterreichen der Raststellung, aber Erreichen des Abschaltpunkts) kein Sicherheitsproblem auftreten kann, stellt dies keine Schwierigkeit dar.

In dieser Ausgangslage und während des Betätigens des Steuerwerks bis zum Einrasten liegt der Schalthebelkörper (38) mit seinem Lappen (39) auf dem äußeren Durchmesser der Steuerscheibe (24). Dies bewirkt, daß der Lappen (40) der Sperrklinke (43) gestattet hat, in die Sperrverzahnung des Sperrads (15) einzutreten und damit zu verhindern, daß das Zeitschaltwerk schon abzulaufen beginnt, bevor die Steuerscheibe (24) ihre Endstellung erreicht hat. Ist der Schalthebelkörper (38) mit seinem Lappen (39) jedoch hinter die Sperrkante (34) getreten, wird über den Lappen (40) die Sperrklinke (43) aus der Sperrverzahnung des Sperrades (15) herausbewegt und das Zeitschaltwerk beginnt abzulaufen.

Während des Bewegens des Steuerwerks in die Gesperrtstellung hat auch der Schenkel (30) der Drehfeder (29) den Stift (49) in der Verriegelungsstange (47) erreicht und übt damit auf die letztere eine Kraft aus, welche die der Feder (4) um ein beträchtliches übersteigt. Da jedoch der Sperrhebel noch in die Sperrnut (46) der Verriegelungsstange (47) eingreift, kann die Entriegelung noch nicht erfolgen.

Gegen Ende der Ablaufdauer des Zeitschaltwerks (13) hat sich der Nocken (17) in die Nähe des Arms (48) des Sperrhebels (45) bewegt und drängt bei Erreichen des Schaltpunkts den Zeit-Sicherungshebel (45) aus der Nut (46) heraus. Angetrieben durch die Feder (30) gibt der Verriegelungsbolzen (3) den Schlüssel zum Öffnen der Tür jetzt frei. Zur Notentriegelung wird am Knopf (56) der Schieber (54) in Pfeilrichtung gezogen. Dabei wird zunächst die Schräge (53) den Zeitsicherungshebel (45) außer Eingriff mit der Verriegelungsstange (47) bringen und sodann über die Kante (55) und den Stift (49) den Verriegelungsschieber selbst in die Entriegelungsstellung bringen. Die Klinke (57) hält ihn dann in dieser Stellung fest, bis durch Betätigung des Sicherheitsschlosses (59) die Verklinkung wieder aufgehoben wird. Da der Entschalter (48c) in jedem Falle bis zum Aufheben der Verklinkung geöffnet bleibt, kann auch die zu sichernde Maschine nicht eingeschaltet werden.

Die oben beschriebene Sicherheitsverriegelung mit mechanischer Freigabeverzögerung kann nicht nur mit Uhrwerkshemmungssondern auch mit jeder anderen mechanischen Hemmeinrichtung, etwa pneumatischer oder hydraulischer Art ausgebildet sein.

## Ansprüche

1. Sicherheits-Türverriegelungsvorrichtung für die Überwachung und Zuhaltung beweglicher Schutzeinrichtungen an technischen Anlagen mit einem ausfahrbaren Verriegelungsbolzen, der mit einem Positionsschalter zusammenwirkt und ein an der jeweiligen Schutzeinrichtung befestigtes Betätigungsorgan verriegelt, und vorzugsweise mit mindestens einem weiteren Positionsschalter, der mittels des Betätigungsorgans über eine Schaltkurve zwangsläufig gesteuert wird,
**dadurch gekennzeichnet,**
daß der Verriegelungsbolzen (3) mittels eines über eine mechanisch wirkende Hemmeinrichtung (13) verzögert wirkendes Entriegelungselement entriegelbar ist.

2. Sicherheits-Türverriegelungsvorrichtung für die Überwachung und Zuhaltung beweglicher Schutzeinrichtungen an technischen Anlagen mit einem ausfahrbaren Verriegelungsbolzen, der mit einem Positionsschalter zusammenwirkt ist und ein an der jeweiligen Schutzeinrichtung befestigtes Betätigungsorgan verriegelt, und vorzugsweise mit mindestens einem weiteren Positionsschalter, der mittels des Betätigungsorgans über eine Schaltkurve zwangsläufig gesteuert wird,
**dadurch gekennzeichnet,**
daß ein Steuerwerk mit einem Federantrieb, der mittels eines äußeren Organs von Hand spannbar ist, beim Spannen mit einem in der gespannten Position des Federantriebs in der Anlaufstellung befindlichen Zeitschaltwerk (13) gekuppelt ist, daß das Steuerwerk eine Steuerscheibe (24) und in Abhängigkeit von der Drehstellung der Steuerscheibe (24) in verschiedene Schwenkstellungen versetzbare Arme (41, 44) aufweist, von denen einer den weiteren Positionsschalter kurz vor dem oder im gespannten Zustand des Federantriebs betätigt und ein zweiter eine das Zeitschaltwerk (13) beim Spannen des Federantriebs gegen Ablaufen sichernde Sperre aufhebt, und daß eine durch das Organ spannbare Feder (29) mit ihrem einen Ende in Richtung der Entriegelungslage den Verriegelungsbolzen (3) beansprucht, der in ausgefahrenem Zustand durch einen vom Zeitwerk (13) entriegelbaren Mechanismus verriegelt ist.

3. Sicherheits-Türverriegelungsvorrichtung nach Anspruch 1 oder 2,
**dadurch gekennzeichnet,**
daß das äußere Organ eine in einer Gehäusewand der Sicherheits-Türverriegelungsvorrichtung gelagerte Drehhandhabe (50) ist, die mit einer Buchse (20) des Steuerwerks verbunden ist, die die Steuerscheibe (24) trägt und im Gehäuse (2) drehbar gelagert ist, sowie eine Drehfeder (29) trägt, deren eines Ende in eine Ausnehmung der Buchse (20) eingehängt und deren anderes Ende gegen einen von einer Verriegelungsstange (47) vorspringenden Stift (49) angelehnt ist.

4. Sicherheits-Türverriegelungsvorrichtung nach zumindest einem der vorhergehenden Ansprüche,
**dadurch gekennzeichnet,**
daß die Buchse (20) an einem Ende mit einer Scheibe (26) formschlüssig verbunden ist, die eine Nase (28) aufweist, die gegen einen Mitnehmer (18) des Zeitschaltwerks (13) andrückbar ist, das im Gehäuse (2) auf der dem Steuerwerk entgegengesetzten Seite angeordnet ist.

5. Sicherheits-Türverriegelungsvorrichtung nach einem oder mehreren der vorhergehenden Ansprüche,
**dadurch gekennzeichnet,**
daß die Hemmeinrichtung bzw. das Zeitschaltwerk ein mechanisch arbeitendes Kurzzeitschaltwerk oder pneumatisch oder hydraulisch betätigbar ist.

6. Sicherheits-Türverriegelungsvorrichtung nach einem oder mehreren der vorhergehenden Ansprüche,
**dadurch gekennzeichnet,**
daß die Arme (41, 44) Bestandteile eines im Gehäuse (2) exzentrisch schwenkbar unter Federvorspannung stehenden Schalthebelkörpers (38) sind, der einen mit einer Sperrkante (34) der Steuerscheibe (24) verbundenen, diese bei gespannter Feder (19) verriegelnden, Lappen (39), den winkelversetzt zum Lappen (39) angeordneten ersten Arm (41), der form- und/oder kraftschlüssig mit einem von der Schaltkurve (10) axial verschiebbaren Stößel (42) verbunden ist, und einen zweiten Arm (40), der winkelversetzt zum ersten Arm (41) angeordnet ist und die Verriegelung des Zeitschaltwerks (13) nach dem Spannen der Feder (19) aufhebt, sowie einen dritten Arm (48) aufweist, der mit dem Positionsschalter des Verriegelungsbolzens (3) verbunden ist.

7. Sicherheits-Türverriegelungsvorrichtung nach einem oder mehreren der vorhergehenden Ansprüche,
**dadurch gekennzeichnet,**
daß die Steuerscheibe (24) einen Nocken mit Anschlagflächen (32, 33) für einen ortsfest im Gehäuse (2) angeordneten Anschlag (36) aufweist, der die eine Endlage der Steuerscheibe (24) bestimmt.

8. Sicherheits-Türverriegelungsvorrichtung nach einem oder mehreren der vorhergehenden Ansprüche, **dadurch gekennzeichnet,**
daß das Zeitschaltwerk (13) ein auf einer drehbaren Welle (14) angeordnetes Sperrad (15) mit einer Verzahnung am äußeren Umfang aufweist, die mit der Spitze einer schwenkbar gelagerten Sperrklinke zusammenwirkt, die durch den zweiten Arm (40) steuerbar ist.

9. Sicherheits-Türverriegelungsvorrichtung nach einem oder mehreren der vorhergehenden Ansprüche,
**dadurch gekennzeichnet,**
daß das Sperrad (15) einen Nocken (17) enthält, durch den ein schwenkbar gelagerter Sicherungshebel (45) betätigbar ist, dessen Spitze zur Fixierung der Verriegelungsstange (47) in der ausgefahrenen Stellung des Verriegelungsbolzens (3) in eine Sperrnut (46) eingreift.

10. Sicherheits-Türverriegelungsvorrichtung nach einem oder mehreren der vorhergehenden Ansprüche,
**dadurch gekennzeichnet,**
daß im Gehäuse (2) ein zweiarmiger Hebel (42c) schwenkbar gelagert ist, der durch einen Mitnehmer (34a) gegen den weiteren Positionsschalter andrückbar ist.

11. Sicherheits-Türverriegelungsvorrichtung nach einem oder mehreren der vorhergehenden Ansprüche,
**dadurch gekennzeichnet,**
daß im Gehäuse (2) ein von dessen Außenseite von Hand axial beweglicher Notentriegelungsschieber (54) angeordnet ist, der einen Vorsprung mit einer Schräge (53) zur Steuerung des Sicherungshebels (45) und eine Kante (55) zur Mitnahme des Stifts (49) der Verriegungsstange (47) aufweist.

FIG.1

FIG.2

FIG.3